# EUROPEAN PATENT SPECIFICATION

(11) **EP 0 728 407 B1**
(45) Date of publication and mention of the grant of the patent: **19.01.2000**
(21) Application number: 96200420.6
(22) Date of filing: 19.02.1996
(51) Int. Cl.: A01C 7/20

(54) **A sowing machine**
Sähmaschine
Semoir

(30) Priority: 22.02.1995 NL 9500335
(43) Date of publication of application: 28.08.1996
(73) Proprietor: MAASLAND N.V., 3155 PD Maasland (NL)
(72) Inventor: Bom, Cornelis J.G., 3181 VC Rozenburg (NL); Brabander, Adrianus P.M., 2295 LL Kwintsheul (NL); Tollenaar, Eduard, 2295 VR Capelle a/d Ijssel (NL)
(74) Representative: Corten, Maurice Jean F.M.

(56) References cited:
- WO-A-87/00392
- DE-A- 2 949 266
- FR-A- 1 455 700
- GB-A- 2 042 314

## Description

The present invention relates to a sowing machine comprising sowing elements for depositing seed into the soil, and a carrier extending transversely to the direction of travel A, to which carrier the sowing elements are connected next to each other via a holder.

Such a construction is known from the German Offenlegungsschrift 29 49 266. In this machine seed is brought into the soil via a plurality of transverse rows of sowing elements. To this end the machine comprises a plurality of differently shaped holders for a sowing element, which holders are welded to the carrier. The known construction, however, is relatively expensive in production due to welding of the holders and to the necessity of creating various different types of holders and has the disadvantage that a required small distance between the seed rows to be created cannot, at least not easily, be obtained.

It is the object of the invention to obviate such problems in particular, and to come to a favourable construction for a carrier, a holder and a sowing element assembly in general.

According to the invention, such may be achieved in that the machine is provided with clamping means for clamping a holder against the carrier and in that the holder at the rear side of the carrier is provided with a plurality of openings, in each of which there can be included a sowing element at the rear side of the carrier.

In the construction according to the invention, instead of the holders, the sowing elements are now made of different sizes, which proves to be relatively easy as these generally comprise a pipe part. These parts can easily be produced in two or more different types by simply cutting off pipe parts in a different size for each type and subsequently bending the pipe part differently for each type. The invented construction furthermore provides the possibility of displacing sowing elements further from or closer to each other. The latter may be done extremely close as the fastening means, e.g. bolts, for fastening a sowing element to a holder or adjacent holders with sowing elements, may be arranged out of line, due to the plurality of openings in each holder. The present invention keeps the advantage of the known construction that all holders and sowing elements extend at the rear side of the carrier, thus keeping the point of gravity of the assembly of carrier and sowing elements closest possible to the tractor. Further advantages of the present construction include that mistakes during fabrication or assemblage of the machine are avoided through uniform holders, and are easy to correct.

Defining further aspects thereof, the machine according to the invention may be characterized in that
- the machine comprises a driving wheel for a dosage member arranged between two coulters each constituting a seed row,
- the shaft of the driving wheel is situated behind the next-to-foremost coulter row and in front of the rearmost coulter row,
- the driving wheel is disposed next to a sowing coulter which, measured in the direction of travel and from the front side of the imaginary circumferential circle of the driving wheel, is arranged in front of the circumferential circle or at least at less than a quarter of the wheel diameter behind the front side thereof,
- the driving wheel is disposed next to a sowing coulter which, measured in the direction of travel, is arranged behind the shaft of the driving wheel,
- the sowing coulter disposed next to the step wheel and behind the shaft thereof is connected with the carrier, together with the sowing coulter arranged on the same side in the second seed row, counted from the driving wheel,
- the seed tube of the sowing coulter disposed directly next to the driving wheel and behind the shaft thereof, comprises a bending transversely to the direction of travel, which bending extends at least substantially behind the front side of the driving wheel,
- a chain guard of a drive extends substantially upwards from the shaft of the driving wheel and is connected with the carrier arm for the driving wheel by means of adjusting means with the aid of which the angle between the longitudinal axis of the drive and the arm is adjustable,
- the machine comprises a switching device for markers, which switching device is provided with a unilaterally operating hydraulic adjusting member in which there is included a spring element,
- the switching device comprises locking arms, which are provided with a guide lug by means of which the locking arms can push each other alternately out of a locked position.

For a better understanding of the present invention and to show how the same may be carried into effect, reference will now be made, by way of example, to the accompanying drawings, in which:
Figure 1 shows, in side view, a machine according to the invention, in a position in which it is connected with the lifting hitch of a tractor;
Figure 2 is an enlarged view of a detail of the machine according to the arrow II in Figure 1;
Figure 3 is a side view according to the arrow III in Figure 2;
Figure 4 is a rear view of the machine according to the arrow IV in Figure 1;
Figure 5 is an enlarged view of a detail of the machine according to the arrow V in Figure 1;
Figure 6 shows, in plan view, the construction in Figure 5;
Figure 7 is a cross-section taken on the line VII-VII in Figure 6, and
Figure 8 shows, in plan view, part of the sowing machine in a preferred embodiment.

In the drawings, corresponding parts have been indicated by the same reference numerals. Furthermore, the invention is by no means restricted to the embodiments shown and described here; they only serve to illustrate the inventive idea.

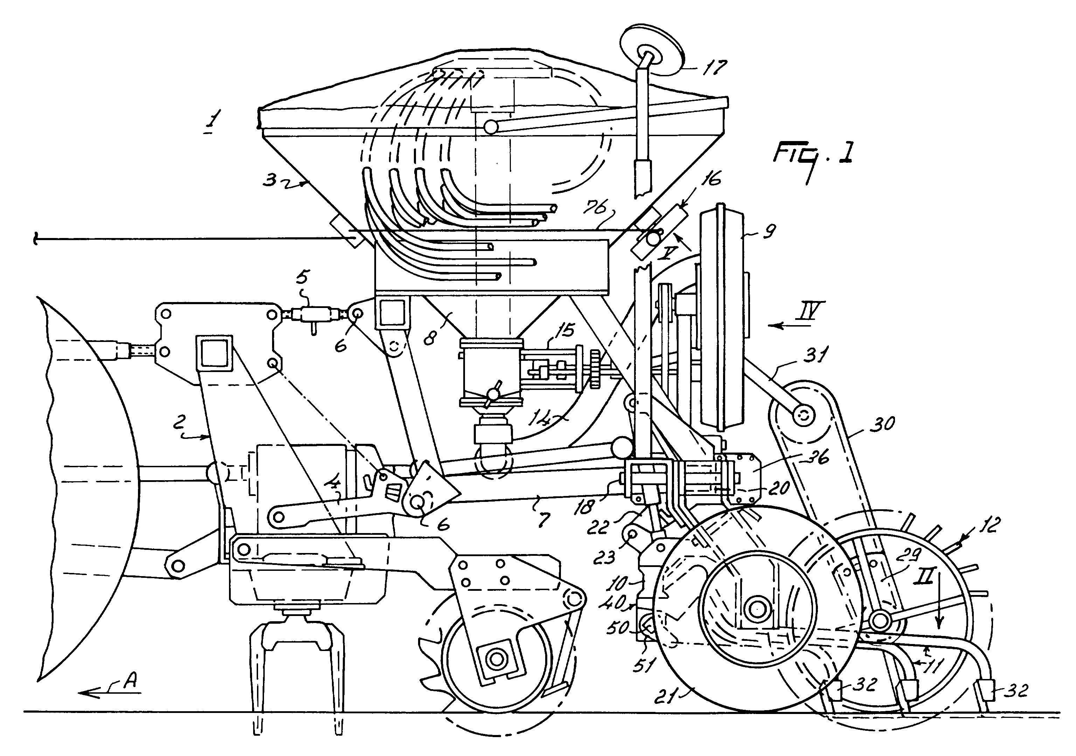

Figure 1 shows an agricultural machine 1 being a combination of a rotary harrow 2 known per se and a sowing machine 3. For that purpose the rotary harrow 2 is provided at the rear side of its trestle with coupling arms 4, 5 known per se, engaging the coupling points 6, via which the present sowing machine 3 might also be coupled in a customary manner to the normalized three point lifting hitch of a tractor. The sowing machine 3 comprises a frame 7, on which the coupling points 6 are provided and to which there are attached a hopper 8, a ventilator device 9 for the purpose of pneumatic transport of seeds, a carrier beam 10 for the sowing elements 11 and a driving wheel 12. Via a tube 14 the ventilator 9 is connected to a dosage member 15, which is fastened against the lower side of the hopper 8. In a manner known per se, the dosage member 15 is in driving communication with the driving wheel 12, also called step wheel. The dosage member supplies seed from the hopper 8 to a mixing tube having a length of approximately one metre and extending vertically in the centre of the hopper, in line with the ventilator tube 14. The dosaged seed is split up in the mixing tube in the air current produced by the ventilator 9. At its upper end the mixing tube debouches into a distributing member known per se, in which the seed and air currents are distributed among flexible transport lines connected to the distributing member, which transport lines lead to the sowing elements 11.

Furthermore, the sowing machine 3 is provided with a switching device 16 attached against the rear side of the hopper 8, for the purpose of raising and lowering so-called markers 17, which are pivotably connected about a shaft 18, orientated horizontally in the direction of travel A, with the sowing machine 3. Near its rear side the frame 7 includes a frame beam 20 extending transversely to the direction of travel A, on which, near the transversal centre of the machine, the ventilator device 9 is mounted. In the present embodiment, having a width of approximately three metres, at the ends of this frame beam 20 there are provided wheel supports including wheels 21 for the machine. The wheel supports are pivotable through 180° about the pivot shaft 18 and adapted to be locked into a transport position realized therewith.

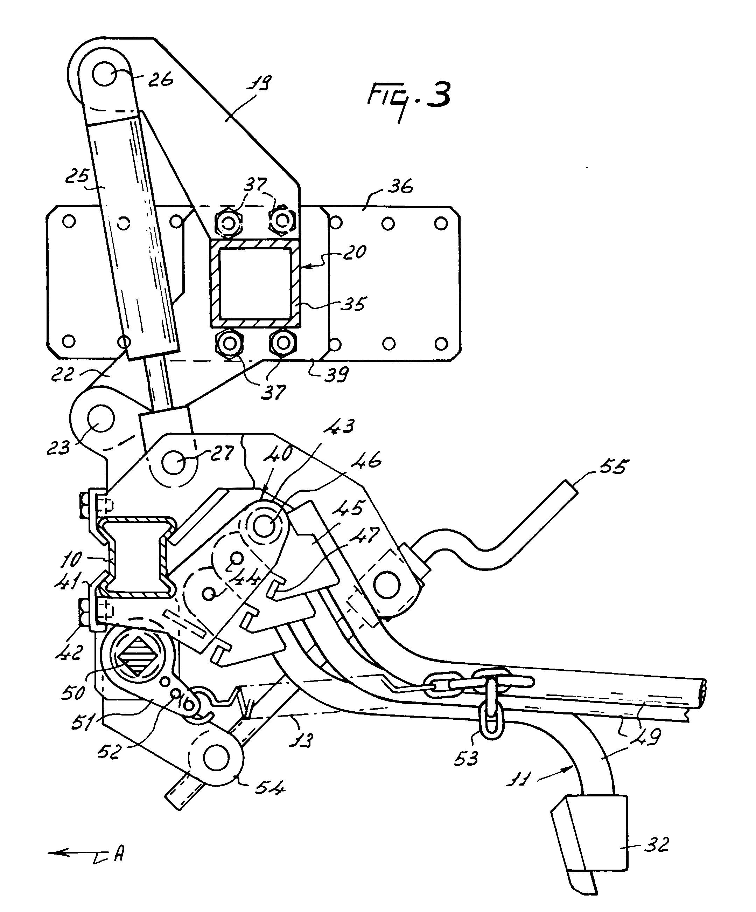

Against the lower side of the frame beam 20 the machine 1 comprises two downwards extending supports 22 (see also Figure 3), against the lower ends whereof, via the pivot shaft 23 orientated transversely to the direction of travel A, there are provided the carrier 10 for the sowing elements 11, the driving wheel 12 and a non-shown brushing device. In the vicinity of at least one of the two supports 22 for the carrier 10 but, measured in the direction of travel A, at some distance therefrom, the machine 1 comprises a control member 25, whose ends are pivotably attached via pivot shafts 26, 27 orientated transversely to the direction of travel A, which control member 25 extends substantially vertically between the frame beam 20 and the carrier 10. In the present embodiment there is provided, on the frame beam 20, a support 19 for the upper pivot shaft 26, which support extends upwards and somewhat forwards therefrom.

Via an arm 28 extending substantially in the direction of travel A, the step wheel 12 is pivotably connected, about a shaft orientated transversely to the direction of travel, to the carrier beam 10. On the arm 28 for the step wheel 12 there is provided a chain guard 30, extending upwards and somewhat forwards, for transmitting the wheel movement to a higher situated point. The chain guard 30 is disposed pivotably about the pivot shaft of the step wheel 12 relative to the arm 28, but fixably in a limited number of mutual angle positions. For that purpose, there is provided against the arm 28 a plate 29 extending vertically in the direction of travel A including a number of boreholes disposed concentrically about the shaft of the step wheel 12, in one of which boreholes the chain guard 30 can be fixed at a desired angle relative to the arm 28.

On an outgoing shaft stump near the upper side of the chain guard 30 there is connected, via a universal joint, a telescopic coupling shaft 31 extending substantially transversely to the direction of travel A. With its other end, situated near the centre of the machine, this coupling shaft 31 is connected, also via a universal joint, to a chain guard having a square transmission attached against the frame 7, 20 of the sowing machine 3, from where, finally, the pivot shaft of the dosage member 15 is driven, which shaft is orientated in the direction of travel A.

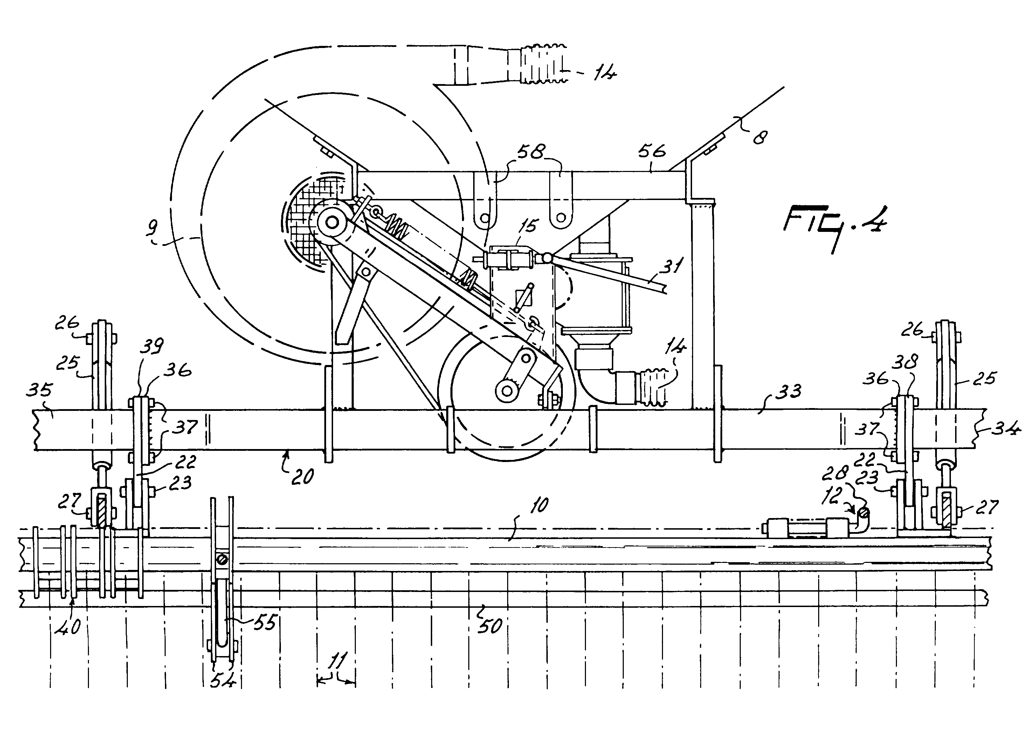

The rearmost frame beam 20, as is apparent e.g. from Figure 4, is divided into a central portion 33, constituting part of a cubical frame part, and two lateral portions 34, 35, which, via coupling means constituted in the present embodiment by sketch plates 36 and 38, 39, and nutted bolts 37, are detachably connected with the central portion 33. In the present embodiment, the sketch plates 36, 38, 39 extend vertically in the direction of travel A and are provided with fastening points in the form of boreholes which, seen in the direction of travel A, are disposed behind each other. In a non-shown embodiment the plates 36, 38, 39 comprise a plurality of rows of boreholes or rows of boreholes that are disposed at different levels of height. The sketch plates 36, 38, 39 are provided in the vicinity of the cubical frame, while the supports 22 and the control member 25 for the carrier 10 are connected with a lateral portion 34, 35 of the frame beam 20.

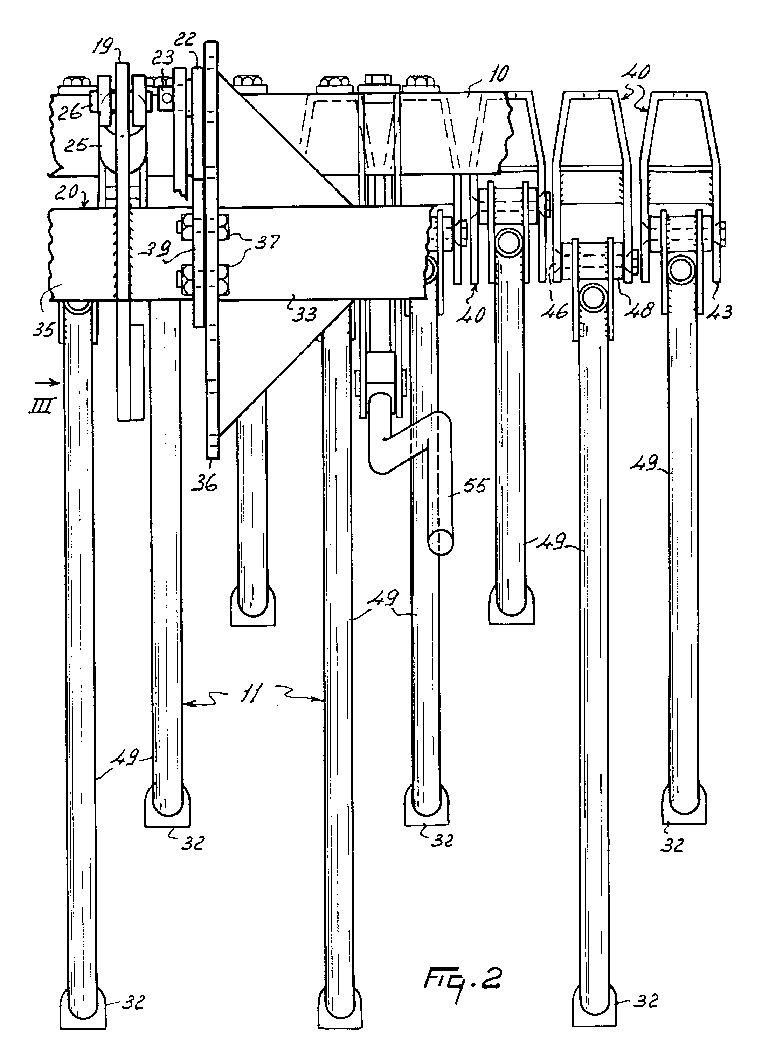

As is shown in Figure 3, in the present embodiment the carrier 10 is constituted by a so-called profiled beam. The sowing elements 11 coupled with the carrier 10 comprise a seed tube 49 which, with its foremost end, is connected to a flexible transport line connected with the distributing member. In the present embodiment, against the rear end of the seed tube, there is provided a coulter 32 or sowing shoe for depositing the seed supplied into the soil. The seed tubes 49 are pivotably connected with the carrier 10 via a holder 40, which, seen in plan view, is U-shaped (see Figure 2). Via a clip piece 41 known per se and a single clamping element 42 in the form of a nutted bolt, the holder 40 is clamped against the lower side of the profiled beam 10, and is hooked, behind a profile of the latter beam, to the side thereof facing the bolt 42. Seen in side view, the legs of the holder 40 extend from the rear side of the carrier 10 in a projection 43 directed rearwards and upwards at an angle of approximately 45°. The projection 43 comprises three openings 44 provided at an equal mutual distance and in line with the latter projection, which openings are constituted in the present embodiment by boreholes. To the seed tubes 49, near their foremost ends, there is attached a set of arms 45 which, underneath a bending in the seed tube, extend vertically in the direction of the openings 44. Consequently, by means of a single bolt/nut-connection 46, a seed tube 49 is pivotably connected in two distant points with the holder 40. The arms 45 are made of plate portion and include at least one projection 47 branched off so as to extend transversely to the direction of travel A. A projection 47 extends laterally so as to form a stop against one of the legs of the relevant holder 40. The stops 47 enable to lift the sowing coulters 32 together out off the soil. In the present embodiment the arms 45 are rigidly connected, near their foremost ends, with a drum 48 extending so as to fit between the legs of a holder 40. Via a bolt/nut connection 46, the drum 48 is pivotably included in the holder 40. In a non-shown embodiment, the arms extend partially sidewards while ending in a drum designed somewhat shorter, now primarily serving as a packing piece. Although welded connections are not required in this embodiment, there is obtained a wide support for the sowing elements 11.

Seen in plan view, the legs of the U-shaped holders 40 are arranged at a mutual distance in such a way that on the carrier 10 there is covered a width of approximately 90 mm. The boreholes in the leg projections 43 of the holder 40 taper at the outside. The nutted bolt 46 applied here has a conical face fitted thereto so that, at a desired minimum adjustable seed row distance of 10 cm, there is realized a widest possible support for the arms of the seed tubes 49. The length of the applied bolt 46 is 94 mm. In this construction, the corresponding nut can be screwed entirely over the end of the thread until a limit determined by the drum 48 arranged between the legs of the holder 40. According to the invention, the head of the bolt 46 is disposed almost entirely in the tapering recess of a borehole 40. The nut has partially a hexagonal circumference which, for the purpose of engaging a key, projects approximately 4 mm outside the recess i.e. the holder 40.

Under the carrier 10, parallel thereto and bearing-supported in supports connected thereto, extends an angular, profiled adjusting tube 50. Spring holders 51 provided with a suitable opening are brought around the profiled tube 50. In a starting position these holders include a projection extending rearwards and downwards at an angle of approximately 45°, in which, at an equal mutual distance and in line with the projection, there are disposed boreholes 52. Each time there is arranged in one of the boreholes a tension spring 13, extending in the direction of travel A and being connected with its rear end at some distance from the arms 45 and via a chain 53 to a seed tube 49. The adjusting tube 50 comprises near its centre an arm 54 extending in the starting position at least rearwards, which arm 54 is pivotably connected near its end with a screw spindle 55 attached against the carrier beam 10.

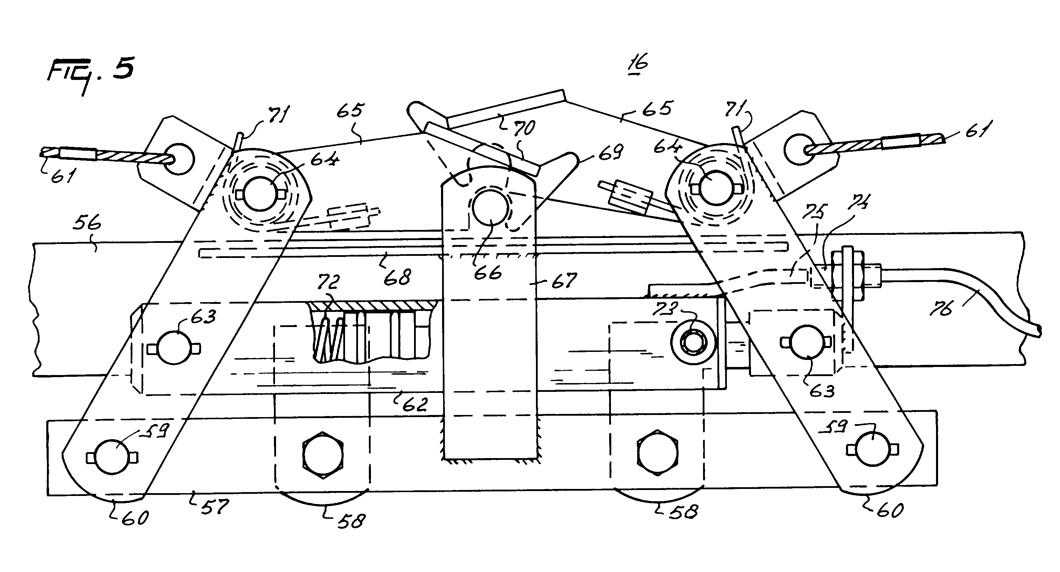

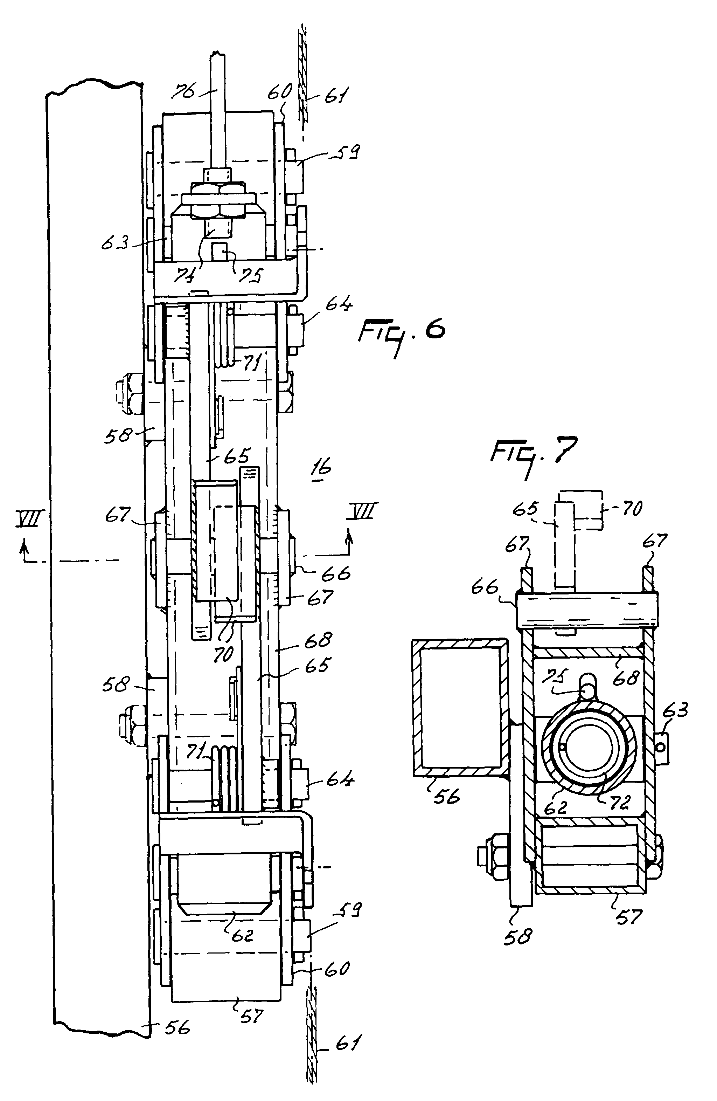

The Figures 5 to 7 show in detail the switching device 16 for the markers 17. In the present embodiment, the switching device is provided with a fastening element 56 in the form of a box girder by means of which said device is attached against the hopper 8 of the sowing machine 3. The device 16 comprises a carrier 57, also in the form of a box girder, which, in the present embodiment, is screwed against lugs 58 extending vertically downwards from the fastening element 56. Near its ends, pivotably about a pivot shaft 59 orientated substantially in the direction of travel A, there is provided a control arm 60. During a non-operative position of the markers 17, the latter control arm extends upwards in the direction of the centre of the carrier 57 at an angle of between 45 and 60° relative to the carrier 57. Near its upper end, an arm 60 is provided with an eye for the fastening of a cable 61 which is connected with its other end to the arm of a marker 17, i.e. in the vicinity of the pivot shaft 18 thereof. In the present embodiment, an arm 60 is constituted by two interconnected strip portions which are both pivotable along an upright side of the carrier 57.

The two arms 60 of the switching device 16 are interconnected by a control member 62 extending parallel to the carrier 57. This control member 62 is connected with the two arms 60 via pivot shafts 63 and is designed, in the present embodiment, as an hydraulic adjusting cylinder having a unilateral pressure load capacity and being active against spring action. In this embodiment, in the cylinder part between the closed-off end thereof and the piston head therein, there is included a pressure spring 72, while the adjusting cylinder 62 is connectable via a line 71, indicated in cross-section, to the hydraulic system of a tractor. The control member 62 can be activated, either from the cabin of a tractor or by means of a programmable or non-programmable electronic switching circuit. Near the upper side of the arms 60, there is provided an internally directed locking arm 65 made of plate material, pivotably about a shaft 64 orientated parallel to the other pivot shafts 59 present in the device 16. In a locked position, this arm 65 extends substantially horizontally, while it is situated with a suitable recess provided at its lower side and near its free end over a catch 66. This catch 66 constitutes a fixed connection between two upwardly directed supports 67, each fastened to an upwardly directed side of the carrier 57, centrally between the shafts 59. For the locking arms 65, there is attached between the supports 67 a plate-shaped guide element 68, rigidly connected as well and rather close below the catch 66, which guide element 68 extends substantially horizontally. The locking arms 65 have a bevelled end 69 so as to form an angle of approximately 45° relative to the longitudinal direction of said arms, the largest length of these arms being at the upper side. Near the upper side of its front, the locking arm 65 comprises a sidewards extending lug 70 forming an angle of 90° relative to an upright side of said arm and one of approximately 30° relative to the longitudinal direction thereof. Relative to the control arm 60, the locking arm 65 is pushed downwards by a pressure spring element 71 wound about the pivot shaft 64 of said locking arm.

On the end of the piston rod of the cylinder 62 there is provided a sensor 74 which cooperates with a reference-element 75 disposed against the nearby end part of the cylinder 62. The sensor 74 and the reference-element 75 are arranged in such a way that each of them has one side facing a side of the other one. Each time when the sensor 74 is situated in the vicinity of the reference-element 75, in the switching circuit pertaining to the machine, this is recorded by means of a counter. When the latter reaches a fixed adjustable value, by means of the switching circuit the seed supply to one or more sowing coulters is stopped during a processing run for the purpose of forming a driving path. After the processing run has been completed, the counter is put back to an initial value. In the embodiment shown the sensor is constituted by a so-called Namur-sensor, while the reference-element 75 consists of an iron core. The reference-element 75 can also be constituted by e.g. the nearby end of the cylinder part. As soon as the iron core is situated in the vicinity of the Namur-sensor, or in the vicinity of the coil provided therein, the electric condition of the sensor 74 undergoes a change which is detected via the guide element 76 in the electronic switching circuit and is subsequently recorded by the aforementioned counter. When the sensor 74 is designed as a so-called Reed-switch, the counter operates in a similar manner.

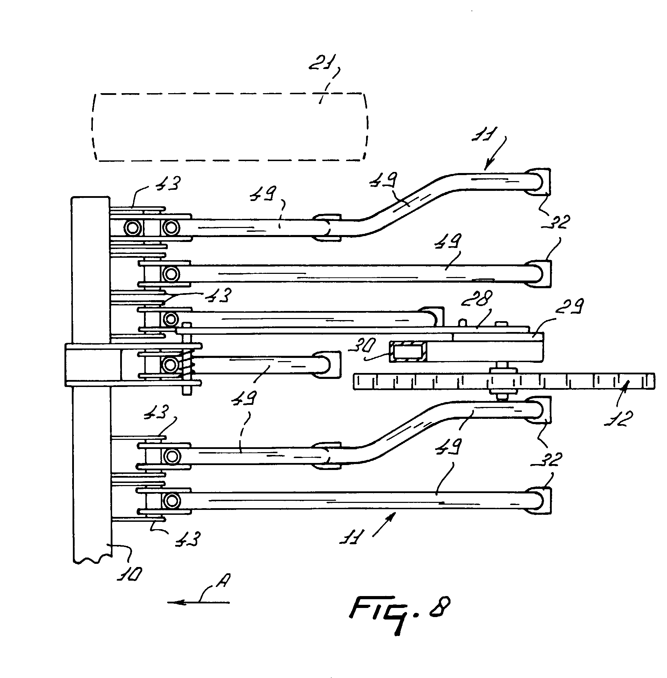

As is shown in Figure 8, the sowing coulters 32 are arranged in three rows not overlapping each other, orientated transversely to the direction of travel A. These rows will be designated hereafter by coulter rows. For that purpose the seed tubes 49 are designed in three different lengths. Furthermore, the sowing coulters 32 are disposed in such a way that the sowing coulter meant to form the neighbouring seed row, is always situated in one of the two other coulter rows. In the arrangement shown in Figure 4, behind the central portion 33 of the frame beam 20, i.e. near one of the two sketch plates 36, the step wheel 12 is connected with the carrier 10, and is arranged in such a way that its axis of rotation, seen in plan view, is situated between the foremost and the rearmost coulter row, preferably between the second and the rearmost one. The two sowing coulters 32 forming the seed rows situated directly next to the step wheel 12, are disposed in such a way that one of them is situated in the foremost coulter row and the other one constitutes part of the rearmost coulter row. The rearmost sowing coulter 32 thereof is positioned by means of a special seed tube 78 which, seen in plan view, includes a bending transversely to the direction of travel A. The relevant seed tube 78 is connected with the carrier 10 via the holder 40 of a nearby seed tube 49 for the first, i.e. foremost, coulter row.

The function of the construction will be explained in what follows.

The Figures 1 to 3 show a construction in which the carrier 10, together with the outer frame portions 34 and 35, is fixable either in a rather forward or in a rather rearward position relative to the central frame portion 33 of the machine. This has the advantage that the carrier 10, the outer portions 34, 35 of the carrier frame 20 and the supporting wheels 21 connected therewith can be included as near to the tractor as is allowed by the dimensions of the roller of a soil cultivating machine 2 possibly coupled between the sowing machine 1 and the tractor. It is noted that the cubical skeletton 7 constituting the frame of the sowing machine is situated at such a height that it extends usually above a pressing roller often applied behind soil cultivating machines 2. The supporting wheels 21 are connected with an outer frame beam portion 34, 35 in such a way that the imaginary foremost vertical tangent line thereof extends behind the most forwardly projecting part of the carrier 10 or the adjusting tube 50. From the carriers 10, holders 40 for the seed tubes 49 including the sowing coulters 32 extend rearwards, also for the purpose of displacing the centre of gravity of the machine as forwardly as possible. The described form and orientation of the holders 40 also constitute a simplification of the mounting of the holders 40, because the risk of mistakes during mounting as to a forward or backward direction of the holders 40, is reduced to a large extent, and the fastening of the holders 40 can always take place from one side.

During operation, the machine, near its front side, is supported by coupling arms 5, 4 of either a tractor or an intermediary soil cultivating machine 2, and, near its rear side, by the supporting wheels 21. Via the wheels 21 and depending on the way of coupling, the machine is allowed to follow freely possible unevennesses in the field. For that purpose it is advantageous that the wheels 21 are situated in the vicinity of the sowing coulters 32, so that the spring pressure, whereunder said coulters are inserted into the soil during operation, fluctuates as little as possible. This spring pressure can be increased or reduced centrally, i.e. with the aid of the single screw spindle 55, according to the resistance of the soil type. Upon turning at the head of the field, the coulters 32 can be put out of operation together by means of the step wheel by activating a control member 25, which means, in the present embodiment, that the piston rod is withdrawn. Thereafter the whole of the carrier 10, the adjusting tube 50 and the parts connected therewith such as the step wheel 12, the sowing coulters 32 and the adjusting element 55, pivot about the pivot shafts 23 upwards and forwards. This prevents e.g. the seed tubes 49 from getting twisted during turning at the head of the field. In case that the sowing machine 3 via an intermediary soil cultivating machine 2 is coupled with the tractor, the machine combination 1 comprises, as is shown in dotted lines in Figure 1, a chain extending between the lower coupling arms 4 and the upper side of the coupling trestle of the intermediary machine 2. The length of the chain limits the downward deflection capacity of the sowing machine 3 relative to the intermediary soil cultivating machine 2, during transport as well as during operation. The length of the chains is easily adjustable, which is practical e.g. upon changing from the transport position to the operative position.

Depending on a more forward or rearward fastening point of the carrier 10 relative to the frame 7 of the machine 1, the chain guard 30 of the step wheel 12 is adjustable at various angles relative to the arm 28 orientated substantially in the direction of travel A. On the one hand this has the advantage that, upon operating the adjusting cylinder 25 at the head of the field, the chain guard 30 does not touch the frame beam 20. On the other hand it ensures the upper exit of the chain guard 30 to remain approximately at the same place, irrespective of the fastening point of the outer frame portions 34, 35 relative to the central frame portion 33. Consequently, the favourable angle at which the universal joint shaft 31 is disposed is maintained for the greater part. The holders 40 for the seed tubes 49, 78 are shaped in such a way that two seed tubes can be attached thereto at the same time: one in the lower borehole 44 and one in the upper or rearmost borehole 44. This has e.g. the advantage that, near the support wheels 21 and near the step wheel 12, there can be attached in a simple manner a transversely bended seed tube 78 together with the shortest seed tube 47 into a holder 40, while said seed tube 78 is shaped in such a way that its portion extending substantially horizontally in the direction of travel is situated at a higher level than the corresponding portion of a short seed tube 49.

The transversal bending of the seed tube 78 extends at least for the greater part behind the foremost circumferential portion of the driving wheel 12. As is shown in Figure 8, near the ends of the frame beam 20 against the carrier 10, there is always provided first a transversely bended seed tube 78 in such a way that the relevant sowing coulter 32 is disposed behind the supporting wheel 21.

The two seed tubes 78 provided at the ends of the carrier 10 and extending to behind the supporting wheels 21 constitute each other's mirror image. Directly adjacent to the seed tubes 78, there is disposed a seed tube 49 ending in the foremost coulter row. The latter seed tube is mounted on the same, counted from the outside first holder 40. In the preferred embodiment according to Figure 8, there is provided in the second holder 40, also counted from the outside, a long seed tube 49 ending in the rearmost coulter row. Then, the third holder connects a fourth seed tube 49 of medium length ending in the second coulter row to the carrier 10, while the fourth holder couples a short fifth seed tube 49 ending in the first coulter row. Furthermore, between the fourth and fifth holder, there is a position for one holder left vacant, while the fifth holder connects the sixth and seventh seed tube 78, respectively 49 to the carrier 10. According to the preferred embodiment, between the fifth and sixth seed tube 49, respectively 78, there is disposed the running wheel 12 whose shaft is situated between the middle and outer coulter row. This has the advantage that the foremost sowing coulter 32 of the directly neighbouring seed row is situated in front of the intersection of the soil surface and the circumference of the step wheel 12. By means of this arrangement the latter wheel is prevented from being stopped due to possible catching of the projections provided thereon behind the crop residues turned up by the relevant sowing coulter 32. In the present embodiment the step wheel 12 is constituted by a hoop of little width, i.e. 1 to 2 cm, which hoop is supported via a number of spokes on the hub for the pivot shaft. Against its outermost circumferential edge the hoop of the step wheel 12 includes projections adapted to be pushed into the cultivated soil by means of which the force required for the dosage member 15 is obtained.

The switching device 16 shown in the Figures 5 to 7 is represented in a position as occurs at the head of a field or at the end of a working run, in which position the control member 62 is obstructed by the switching circuit in the shown position. This is realized by means of an hydraulic sliding block included in the hydraulic line between the tractor and the cylinder. As soon as the driver informs the switching circuit via a control panel that a new working run is started, the blocking is removed. The oil flows from the cylinder back to the tractor and the right hand marker of the machine falls towards the ground. The resistance of the oil flowing back is broken by the gravity transmitted by the marker via the cable 61, the arm 60 and the shaft 63 on the piston rod of the cylinder 62 and by the force of the pressure spring disposed in the cylinder 62. Upon falling of the marker, the right hand locking hook is maintained above the catch 66, because the latter via its lug 70 is supported against the lug 70 of the other marker. As soon as this lug 70 has slided from the lug 70 of the left hand marker, the right hand locking hook 65 is pushed downwards by the pressure spring 71 against the guiding plate 68. When, subsequently, the driver indicates the end of the working run, by means of the hydraulic pressure from the tractor, the cylinder 62 is withdrawn and the right hand arm 65 moves along the guide element 68 towards the catch 66, while the lug 70 of the right hand locking hook 65 ends under that of the left hand locking hook 65. Upon further withdrawal of the cylinder 62, the beveled end of the right hand locking hook 65 touches the catch 66, so that said locking hook 65 is guided vertically, while the left hand locking hook 65, against the pressure of the left hand spring 71, is lifted out of its locked position. At the head of the field, the cylinder 62 is again blocked in its position until the driver indicates the start of a new working run. Then the left hand marker 17 is brought into a working position and the above-described procedure is repeated. The left hand and right hand locking hook push each other alternately out of their locked position. The markers 17 can be pushed manually from the inoperative position which they both have at the head of the field, into a vertical transport position and be locked therein.

With the aid of the number of signals supplied by the sensor 74 established in the electronic switching circuit, or the number of times that a marker is lifted out of operation, a driving patch is laid in the seed bed. For that purpose the seed supply to one or more sowing coulters is blocked automatically. The period in which a driving path or tramline has to be laid or the number of working runs after which this should be done, is adjustable. In the present embodiment, the sensor 74 is also applied in order to move from the switching circuit, automatically and in time, an hydraulic sliding block in the oil supply to the cylinder 62, so that the latter can be brought into a blocked position before the required pertaining safety valve starts to operate.

## Claims

1. A sowing machine comprising sowing elements (11) for depositing seed into the soil, and a carrier (10) extending transversely to the direction of travel (A), to which carrier (10) the sowing elements (11) are connected next to each other via a holder (40), characterized in that the machine is provided with clamping means (41, 42) for clamping a holder (40) against the carrier (10) and in that the holder (40) at the rear side of the carrier (10) is provided with a plurality of openings (44), in each of which there can be included a sowing element (11) at the rear side of the carrier (10).

2. A sowing machine as claimed in claim 1, characterized in that the holder (40) comprises openings (44) disposed in an imaginary line at an angle of 45° relative to a horizontal plane.

3. A sowing machine as claimed in claim 1 or 2, characterized in that the sowing elements constitute a sowing field, in which the sowing elements are always included in the machine as one of three coulter rows arranged behind each other orientated transversely to the direction of travel (A).

4. A sowing machine as claimed in claim 1, 2 or 3, characterized in that a sowing element (11) is connected with a holder (40) via one or more arms (45), which comprise a stop element (47) extending transversely to the direction of travel (A) for the purpose of constituting a stop against the legs of the holder (40).

5. A sowing machine as claimed in any one of the preceding claims, characterized in that the machine comprises an adjusting tube (50) extending parallel to the carrier (10) for the purpose of hooking a tension spring (13), which adjusting tube (50) extends in the space below the carrier (10).

6. A sowing machine as claimed in any one of the preceding claims, characterized in that the adjusting tube (50) is constituted by an unround profiled tube, which is bearing-supported in supports connected with the carrier (10) in the machine.

7. A sowing machine as claimed in any one of the preceding claims, characterized in that the tension spring (13) connected with the sowing elements (11) is connected with the adjusting tube (50) via spring holders (51) put around the adjusting tube (50) in a projection in which there are provided three openings in an imaginary line including an angle of approximately 45° relative to the direction of travel for the purpose of hooking the spring (13), which imaginary line extends preferably rearwards and downwards.

8. A sowing machine as claimed in any one of the preceding claims, characterized in that the carrier (10) is connected pivotably about a pivot shaft (23) orientated parallel to the carrier (10) with the frame (7, 20), which pivot shaft (23) is provided at least partially in the space above the carrier (10).

9. A sowing machine as claimed in any one of the preceding claims, characterized in that the sowing elements (11) can be put out of operation by means of central operation with the aid of an adjusting member (25), which, in the direction of travel (A), at some distance behind the pivot shaft (23) for the carrier (10), is connected with the carrier (10) via a pivot shaft (27), while the pivot shaft (26) is situated between the adjusting member (25) and the frame (7, 20), directly above or in front of the lower pivot shaft (27).

10. A sowing machine as claimed in any one of the preceding claims, characterized in that the sowing machine (3) comprises a frame (7) including a frame beam (20) extending transversely to the direction of travel, which beam consists of a central portion (33) constituting part of the frame (7) and of two outer beam portions (34, 35) fixable against the ends of the central portion (33) at various locations in the direction of travel (A), while the adjusting member (25) is connected to one of the outer beam portions (34, 35).

11. A sowing machine as claimed in any one of the preceding claims, characterized in that all the sowing elements (11) are pivotable about pivot shafts (46) orientated parallel to the carrier (10) and provided therebehind.

12. A sowing machine as claimed in any one of the preceding claims, characterized in that the holders (40) of the machine (3) are identical.

## Patentansprüche

1. Sämaschine mit Säelementen (11) zum Einbringen von Saatgut in den Boden sowie mit einem sich quer zur Arbeitsrichtung (A) erstreckenden Träger (10), an dem die Säelemente (11) nebeneinander mittels eines Halters (40) angeordnet sind,
dadurch gekennzeichnet, daß die Maschine Klemmvorrichtungen (41, 42) zum Befestigen eines Halters (40) an dem Träger (10) aufweist, und daß der Halter (40) auf der Rückseite des Trägers (10) mehrere öffnungen (44) aufweist, in denen jeweils ein Säelement (11) auf der Rückseite des Trägers (10) zu halten ist.

2. Sämaschine nach Anspruch 1,
dadurch gekennzeichnet, daß der Halter (40) Öffnungen (44) aufweist, die auf einer gedachten Linie in einem Winkel von 45° zu einer horizontalen Ebene angeordnet sind.

3. Sämaschine nach Anspruch 1 oder 2,
dadurch gekennzeichnet, daß die Säelemente ein Säfeld bilden, in dem die Säelemente in der Maschine als eine von drei hintereinanderliegenden Reihen von Säscharen ständig angeordnet sind, die quer zur Arbeitsrichtung (A) liegen.

4. Sämaschine nach Anspruch 1, 2 oder 3,
dadurch gekennzeichnet, daß ein Säelement (11) mit einem Halter (40) durch einen oder mehrere Arme (45) verbunden ist, der ein sich quer zur Arbeitsrichtung (A) erstreckendes Anschlagelement (47) aufweist, das einen Anschlag an den Schenkeln des Halters (40) bildet.

5. Sämaschine nach einem der vorhergehenden Ansprüche,
dadurch gekennzeichnet, daß die Maschine zum Einhaken einer Zugfeder (13) ein sich parallel zum Träger (10) erstreckendes Stellrohr (50) aufweist, das im Raum unterhalb des Trägers (10) angeordnet ist.

6. Sämaschine nach einem der vorhergehenden Ansprüche,
dadurch gekennzeichnet, daß das Stellrohr (50) durch ein Rohr mit unrundem Querschnitt gebildet ist, das in Stützen gelagert und abgestützt ist, die mit dem Träger (10) in der Maschine verbunden sind.

7. Sämaschine nach einem der vorhergehenden Ansprüche,
dadurch gekennzeichnet, daß die mit den Säelementen (11) verbundene Zugfeder (13) mit dem Stellrohr (50) durch Federhalter (51) verbunden ist, die das Stellrohr (50) mittels eines Vorsprunges umgreifen, in welchem zum Einhaken der Feder (13) drei Öffnungen ausgebildet sind, die auf einer gedachten Linie in einem Winkel von etwa 45° relativ zur Arbeitsrichtung liegen, wobei sich die gedachte Linie vorzugsweise nach hinten und unten erstreckt.

8. Sämaschine nach einem der vorhergehenden Ansprüche,
dadurch gekennzeichnet, daß der Träger (10) um eine parallel zum Träger (10) ausgerichtete Schwenkachse (23) schwenkbar mit dem Rahmen (7, 20) verbunden ist, wobei die Schwenkachse (23) zumindest teilweise in dem Raum über dem Träger (10) angeordnet ist.

9. Sämaschine nach einem der vorhergehenden Ansprüche,
dadurch gekennzeichnet, daß die Säelemente (11) mittels zentraler Steuerung mit Hilfe eines Stellgliedes (25) außer Betrieb zu setzen sind, das in Arbeitsrichtung (A) mit Abstand hinter der Schwenkachse (23) des Trägers (10) über eine Schwenkachse (27) mit dem Träger (10) verbunden ist, während die Schwenkachse (26) zwischen dem Stellglied (25) und dem Rahmen (7, 20) direkt über oder vor der unteren Schwenkachse (27) angeordnet ist.

10. Sämaschine nach einem der vorhergehenden Ansprüche,
dadurch gekennzeichnet, daß die Sämaschine (3) einen Rahmen (7) mit einem sich quer zur Arbeitsrichtung erstreckenden Rahmenbalken (20) aufweist, der aus einem mittleren Teil (33) besteht, der Teil des Rahmens (7) ist, sowie aus zwei äußeren Balkenteilen (34, 35), die an verschiedenen Stellen in Arbeitsrichtung (A) an den Enden des mittleren Teiles (33) anbringbar sind, wobei das Stellglied (25) mit einem der äußeren Balkenteile (34, 35) verbunden ist.

11. Sämaschine nach einem der vorhergehenden Ansprüche,
dadurch gekennzeichnet, daß alle Säelemente (11) um Schwenkachsen (46) schwenkbar sind, die parallel zu dem Träger (10) ausgerichtet und hinter diesem angeordnet sind.

12. Sämaschine nach einem der vorhergehenden Ansprüche,
dadurch gekennzeichnet, daß die Halter (40) der Maschine (3) identisch sind.

## Revendications

1. Semoir comportant des éléments d'ensemencement (11) pour déposer des semences dans le sol, et une flèche (10) s'étendant transversalement à la direction de déplacement (A), flèche (10) à laquelle les éléments d'ensemencement (11) sont reliés à proximité les uns des autres via un support (40), caractérisé en ce que la machine est munie de moyens de serrage (41, 42) pour scrrer un support (40) contre la flèche (10) et en ce que le support (40) situé au niveau du côté arrière de la flèche (10) est muni d'une pluralité d'ouvertures (44), dans chacune desquelles un élément d'ensemencement (11) peut être inclus sur le côté arrière de la flèche (10).

2. Semoir selon la revendication 1, caractérisé en ce que le support (40) comporte des ouvertures (44) disposées selon une ligne imaginaire faisant un angle de 45° par rapport à un plan horizontal.

3. Semoir selon la revendication 1 ou 2, caractérisé en ce que les éléments d'ensemencement constituent un domaine d'ensemencement, dans lequel les éléments d'ensemencement sont toujours inclus dans la machine sous forme d'une parmi trois rangées de coutres agencées l'une derrière l'autre, orientées transversalement à la direction de déplacement (A).

4. Semoir selon la revendication 1, 2 ou 3, caractérisé en ce qu'un élément d'ensemencement (11) est relié à un support (40) via un ou plusieurs bras (45), qui comportent un élément d'arrêt (47) s'étendant transversalement à la direction de déplacement (A) dans le but de constituer une butée contre les pattes du support (40).

5. Semoir selon l'une quelconque des revendications précédentes, caractérisé en ce que la machine comporte un tube d'ajustement (50) s'étendant parallèlement à la flèche (10) dans le but de crocheter un ressort de traction (13), lequel tube d'ajustement (50) s'étend dans l'espace situé sous la flèche (10).

6. Semoir selon l'une quelconque des revendications précédentes, caractérisé en ce que le tube d'ajustement (50) est constitué par un tube profilé non-circulaire, qui est supporté par un palier dans des supports reliés à la flèche (10) de la machine.

7. Semoir selon l'une quelconque des revendications précédentes. caractérisé en ce que le ressort de traction (13) relié aux éléments d'ensemencement (11) est relié au tube d'ajustement (50) via des supports de ressort (51) agencés autour du tube d'ajustement (50) dans une saillie dans laquelle sont agencées trois ouvertures situées sur une ligne imaginaire incluant un angle d'approximativement 45° par rapport à la direction de déplacement dans le but de crocheter le ressort (13), laquelle ligne imaginaire s'étend de préférence vers l'arrière et vers le bas.

8. Semoir selon l'une quelconque des revendications précédentes, caractérisé en ce que la flèche (10) est reliée de manière pivotante autour d'un arbre de pivotement (23) orienté parallèlement à la flèche (10), au châssis (7, 20), lequel arbre de pivotement (23) est agencé au moins partiellement dans l'espace situé au-dessus de la flèche (10).

9. Semoir selon l'une quelconque des revendications précédentes, caractérisé en ce que les éléments d'ensemencement (11) peuvent être mis hors de fonctionnement par l'intermédiaire d'une opération centrale à l'aide d'un élément d'ajustement (25), qui, dans la direction de déplacement (A), à une certaine distance derrière l'arbre de pivotement (23) de la flèche (10), est relié à la flèche (10) via un arbre de pivotement (27), alors que l'arbre de pivotement (26) est situé entre l'élément d'ajustement (25) et le châssis (7, 20), directement au-dessus ou à l'avant de l'arbre de pivotement inférieur (27).

10. Semoir selon l'une quelconque des revendications précédentes, caractérisé en ce que le semoir (3) comporte un châssis (7) comportant une poutre de châssis (20) s'étendant transversalement à la direction de déplacement, laquelle poutre est constituée d'une partie centrale (33) constituant une partie du châssis (7) et deux parties de poutre extérieures (34, 35) pouvant être fixées contre les extrémités de la partie centrale (33) à divers emplacements dans la direction de déplacement (A), alors que l'élément d'ajustement (25) est relié à l'une des parties de poutre extérieures (34, 35).

11. Semoir selon l'une quelconque des revendications précédentes, caractérisé en ce que tous les éléments d'ensemencement (11) sont pivotants autour d'arbres de pivotement (46) orientés parallèlement à la flèche (10) et agencés derrière celle-ci.

12. Semoir selon l'une quelconque des revendications précédentes, caractérisé en ce que les supports (40) de la machine (3) sont identiques.
